# EUROPÄISCHE PATENTSCHRIFT

(11) **EP 1 718 851 B1**
(45) Veröffentlichungstag und Bekanntmachung des Hinweises auf die Patenterteilung: **16.12.2009**
(21) Anmeldenummer: 05707598.8
(22) Anmeldetag: 24.02.2005
(51) Int. Cl.: F02B 37/013, F02B 37/007, F02B 37/18, F02M 25/07

(54) **BRENNKRAFTMASCHINE MIT ZWEI ABGASTURBOLADERN**
INTERNAL COMBUSTION ENGINE COMPRISING TWO EXHAUST-GAS TURBOCHARGERS
MOTEUR A COMBUSTION INTERNE COMPORTANT DEUX TURBOCOMPRESSEURS A GAZ D'ECHAPPEMENT

(30) Priorität: 28.02.2004 DE 102004009794
(43) Veröffentlichungstag der Anmeldung: 08.11.2006
(73) Patentinhaber: Daimler AG, 70327 Stuttgart (DE)
(72) Erfinder: SCHMID, Wolfram, 72622 Nürtingen (DE); SUMSER, Siegfried, 70327 Stuttgart (DE)
(74) Vertreter: JENSEN & SON
(86) Internationale Anmeldenummer: PCT/EP2005/001908
(87) Internationale Veröffentlichungsnummer: WO 2005/083244

(56) Entgegenhaltungen:
- DE-A1- 19 744 936
- US-A- 4 179 892
- US-A- 5 611 203
- US-A- 5 794 445
- US-B1- 6 378 308
- US-B1- 6 397 598
- US-B1- 6 484 500

## Beschreibung

Die Erfindung bezieht sich auf eine Brennkraftmaschine mit zwei Abgasturboladern nach dem Oberbegriff des Anspruches 1.

Aus der Patentschrift US 6 484 500 B1 geht eine Brennkraftmaschine mit zwei Abgasturboladern hervor, wobei jedem Abgasturbolader jeweils eine Abgasturbine und ein Verdichter zugeordnet sind. Die Abgasturbinen sind im Abgasstrang von Abgas durchströmbar angeordnet. Im Ansaugtrakt sind die beiden Verdichter positioniert. Der Abgasstrang umfasst zwei Abgasleitungen, die jeweils einer Abgasturbine zugeordnet sind, wobei zwischen der Abgasleitung stromauf einer der beiden Abgasturbinen und dem Ansaugtrakt stromab eines Verdichters eine Abgasrückführeinrichtung mit einer Abgasrückführleitung und einem einstellbaren Sperrventil angeordnet ist. Die beiden Abgasleitungen sind über eine Überbrückungsleitung, die stromauf der motornahen Abgasturbine abzweigt, miteinander verbunden. In der Überbrückungsleitung ist ein einstellbares Sperrventil angeordnet. Die Abgasturbinen sind mit einer variablen Turbinengeometrie zur veränderlichen Einstellung des wirksamen Turbinenquerschnitts ausgestattet.

Aus der Druckschrift DE 101 44 663 A1 ist eine Brennkraftmaschine mit zwei Abgasturboladern bekannt, von denen ein erster Turbolader als Hochdruckstufe und der zweite Turbolader als Niederdruckstufe ausgeführt ist. Die Hochdruckstufe ist motornah angeordnet, die Niederdruckstufe befindet sich dagegen in größerer Entfernung zur Brennkraftmaschine. Die Verdichter beider Abgasturbolader sind im Ansaugtrakt in Reihe geschaltet, ebenso sind die Abgasturbinen der beiden Turbolader im Abgasstrang hintereinander liegend angeordnet. Sowohl der Verdichter als auch die Turbine der Hochdruckstufe werden jeweils von einem absperrbaren Bypass überbrückt, wobei jeder Bypass in Abhängigkeit von Motorzustands- und Motorbetriebsgrößen geöffnet bzw. geschlossen werden kann. Bei niedrigen Lasten und Motordrehzahlen ist der Bypass um den Verdichter bzw. die Abgasturbine der Hochdruckstufe geschlossen, die Hochdruckstufe ist aktiviert. Mit zunehmender Last und Drehzahl kann der Bypass um den Verdichter bzw. die Turbine der Hochdruckstufe geöffnet werden, wodurch die Hochdruckstufe deaktiviert wird und die Verdichterarbeit allein von der Niederdruckstufe zu leisten ist.

Derartige Brennkraftmaschinen mit zweistufiger Aufladung weisen zwar ein gegenüber einstufiger Aufladung verbessertes transientes Verhalten auf. Die zweistufige Aufladung hat aber keinen unmittelbaren Einfluss auf das Abgasverhalten der Brennkraftmaschine.

Zur Verbesserung des Abgasverhaltens, insbesondere zur NOₓ-Reduzierung, ist es grundsätzlich bekannt, Abgas aus dem Abgasstrang in den Ansaugtrakt rückzuführen. Eine derartige Abgasrückführung wird insbesondere im Teillastbetrieb der Brennkraftmaschine durchgeführt und wird beispielsweise in der Druckschrift DE 101 52 804 A1 beschrieben. Die Brennkraftmaschine ist mit einem Abgasturbolader ausgestattet, dessen Abgasturbine zwei unterschiedlich große Abgasfluten besitzt, über die Abgas dem Turbinenrad zuführbar ist. Jede Abgasflut ist über jeweils eine Abgasleitung mit jeweils einer Zylinderbank der Brennkraftmaschine verbunden und wird mit den Abgasen der betreffenden Zylinderbank versorgt. Von der Abgasleitung der kleineren Abgasflut zweigt eine Rückführleitung der Abgasrückführeinrichtung ab, welche stromab des Verdichters in den Ansaugtrakt mündet. In der mit der kleineren Abgasflut verbundenen Abgasleitung herrscht ein höherer Abgasgegendruck als in der parallel verlaufenden Abgasleitung, über die die größere der beiden Abgasfluten mit Abgasen zu versorgen ist. Dieser höhere Abgasgegendruck unterstützt die Rückführung von Abgasen in den Ansaugtrakt und ermöglicht eine Abgasrückführung über einen breiten Motorbetriebsbereich.

Der Erfindung liegt das Problem zugrunde, mit einfachen Maßnahmen das Abgasverhalten einer Brennkraftmaschine mit zweistufiger Aufladung zu verbessern.

Dieses Problem wird erfindungsgemäß mit den Merkmalen des Anspruches 1 gelöst. Die Ansprüche 2-11 geben zweckmäßige Weiterbildungen an.

Die mit zwei Abgasturboladern ausgestattete Brennkraftmaschine besitzt zwei Abgasleitungen, die jeweils mindestens einer Abgasturbine zugeordnet sind. Des Weiteren ist eine Abgasrückführeinrichtung vorgesehen, bestehend aus einer Abgasrückführleitung und einem darin angeordneten, einstellbaren Sperrventil, wobei die Abgasrückführleitung von einer der beiden Abgasleitungen stromauf einer der Abgasturbinen abzweigt und in die Ansaugleitung stromab eines Verdichters einmündet. Die Abgasturbine weist zwei separate Abgasfluten auf, die jeweils mit einer der Abgasleitungen verbunden sind und über die dem Turbinenrad der betreffenden Abgasturbine Abgas der Brennkraftmaschine zuführbar ist.

Diese Ausführung eröffnet die Möglichkeit, mit einfachen Mitteln asymmetrische Abgasgegendrücke in den beiden Abgasleitungen jeweils im Abschnitt zwischen dem Auslass der Zylinder der Brennkraftmaschine und den Abgasturbinen einzustellen. Diese Asymmetrie in den Abgasgegendrücken kann für eine verbesserte Abgasrückführung ausgenutzt werden, indem beispielsweise die Abgasleitung an der Abgasrückführung teilnimmt, in welcher sich in bestimmten Betriebszuständen eine den Ladedruck im Ansaugtrakt übersteigender Abgasgegendruck einstellt, wohingegen unter gleichen Betriebsbedingungen in der zweiten Abgasleitung ein Druck einstellbar ist, welcher unterhalb des Ladedruckes liegt.

Diese Asymmetrie kann mit konstruktiv einfachen Mitteln erreicht werden. Gemäß einer vorteilhaften Ausführung ist eine der beiden Abgasturbinen mit zwei separaten Abgasfluten ausgestattet, über die das Abgas dem Turbinenrad der betreffenden Abgasturbine zuzuführen ist. Die beiden Abgasfluten sind jeweils mit einer der beiden separaten Abgasleitungen verbunden. Mithilfe einer unterschiedlichen Querschnittsgeometrie und/oder einer unterschiedlichen Größe der beiden Abgasfluten können verschiedene Abgasgegendrücke in den betreffenden Leitungsabschnitten zwischen der Brennkraftmaschine und dem Eingang zu jeder Abgasflut erzeugt werden.

Zweckmäßig ist jede der beiden Abgasleitungen jeweils mit einem Teil der Zylinder der Brennkraftmaschine verbunden, so dass auch nur die Abgase der betreffenden Zylinder über die jeweils ihnen zugeordnete Abgasleitung abzuführen sind. Üblicherweise besitzt die Brennkraftmaschine zwei Zylinderbänke mit der gleichen Zylinderanzahl, wobei die Abgase jeder Zylinderbank über jeweils eine Abgasleitung abgeführt werden. Möglich ist aber auch eine asymmetrische Aufteilung der Zylinder; bei einer derartigen, asymmetrischen Aufteilung nimmt zweckmäßig diejenige Abgasleitung auch an der Abgasrückführung teil, der die Abgase der größeren Anzahl an Zylindern zugeführt werden.

Die zweiflutige Abgasturbine kann sowohl motornah als auch motorfern im Abgasstrang angeordnet werden. Die Abgasrückführleitung zweigt vorteilhaft stromauf der ersten, motornahen der beiden in Reihe geschalteten Abgasturbinen ab.

Wird die motornahe Abgasturbine mit zwei Abgasfluten ausgebildet, so münden die beiden Abgasleitungen in jeweils eine Abgasflut dieser ersten, motornahen Abgasturbine; beide Abgasleitungen sind somit dieser motornahen Abgasturbine zugeordnet. Die Abgasrückführleitung zweigt von der Abgasleitung ab, welche mit der kleineren der beiden Abgasfluten verbunden ist. Die zweite, motorferne Abgasturbine ist über einen Abgasleitungsabschnitt in Reihe mit der ersten, motornahen Abgasturbine geschaltet.

Sofern gemäß einer alternativen Ausführung die zweite, motorferne Abgasturbine zweiflutig ausgebildet ist, wird eine der beiden Abgasfluten unmittelbar von den Zylindern der Brennkraftmaschine über eine der Abgasleitungen mit Abgasen versorgt, wohingegen die zweite Abgasflut über die andere Abgasleitung in Reihe mit der ersten, motornahen Abgasturbine geschaltet ist; in dieser Ausführung sind die beiden Abgasleitungen unterschiedlichen Abgasturbinen zugeordnet.

Die beiden Abgasleitungen sind vorteilhaft über eine Überbrückungsleitung mit einem darin angeordneten Sperrventil miteinander verbunden. Die Überbrückungsleitung ermöglicht ein Umblasen in bestimmten Betriebszuständen der Brennkraftmaschine von der Abgasleitung mit höherem Abgasgegendruck in Richtung Abgasleitung mit niedrigerem Abgasgegendruck. Diese Umblasung stellt eine zusätzliche Eingriffsmöglichkeit dar, die Betriebsweise der Brennkraftmaschine zu beeinflussen.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer Brennkraftma- schine mit zweistufiger Aufladung und Abgasrückführ- einrichtung, wobei die beiden Abgasturbinen in Reihe geschaltet sind und die motorferne Abgasturbine zwei Abgasfluten aufweist, die über separate Abgasleitun- gen mit Abgas versorgt werden,
- Fig. 2: eine Fig. 1 entsprechende Darstellung einer Brenn- kraftmaschine, jedoch in einer alternativen Ausfüh- rung, bei der die erste, motornahe Abgasturbine mit zwei Abgasfluten versehen ist, die über separate Ab- gasleitungen mit Abgas versorgt werden.

In den Figuren sind gleiche Bauteile mit gleichen Bezugszeichen versehen.

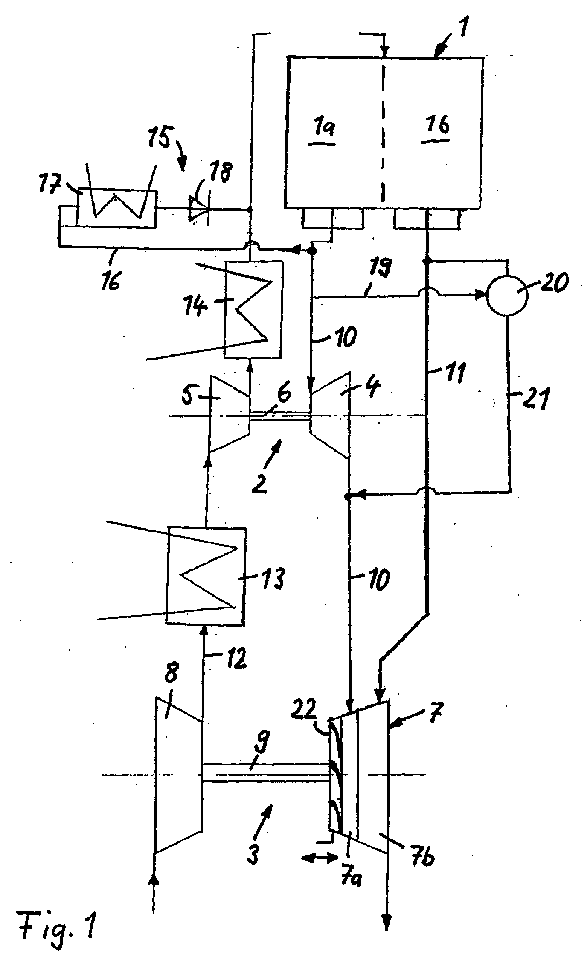

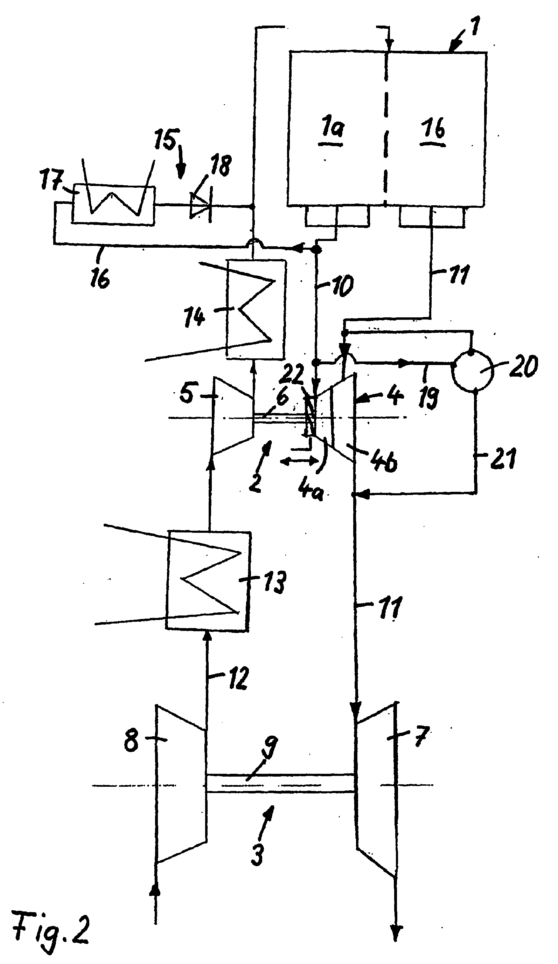

Bei den in den Fig. 1 und 2 dargestellten Brennkraftmaschinen 1 handelt es sich um einen Ottomotor oder um einen Dieselmotor.

Der in Fig. 1 dargestellten Brennkraftmaschine 1, die zwei Zylinderbänke 1a und 1b aufweist, sind zwei in Reihe geschaltete Abgasturbolader 2 und 3 zugeordnet, von denen der erste, motornah angeordnete Abgasturbolader 2 die Funktion eines Hochdruckladers und der zweite, motorferne Abgasturbolader 3 die Funktion eines Niederdruckladers ausübt. Der Hochdrucklader ist kleiner als der Niederdrucklader ausgeführt und besitzt aus diesem Grund auch ein geringeres Massenträgheitsmoment. Der motornahe Abgasturbolader 2 umfasst eine Abgasturbine 4 im Abgasstrang der Brennkraftmaschine, deren Turbinenrad über eine Welle 6 mit dem Verdichterrad im Verdichter 5 verbunden ist, der im Ansaugtrakt 12 der Brennkraftmaschine liegt. In entsprechender Weise umfasst der zweite, motorferne Abgasturbolader 3 eine Abgasturbine 7 im Abgasstrang sowie einen Verdichter 8 im Ansaugtrakt, wobei die Laufräder von Abgasturbine 7 und Verdichter 8 über eine Welle 9 gekoppelt sind. Der Verdichter 8 des motorfernen Laders befindet sich stromauf des Verdichters 5 des motornahen Laders im Ansaugtrakt 12, die Abgasturbine 7 des motorfernen Laders liegt stromab der Abgasturbine 4 des motornahen Laders im Abgasstrang. Im Ansaugtrakt 12 ist den Verdichtern 8 und 5 jeweils ein Ladeluftkühler 13 bzw. 14 nachgeordnet.

Jeder Zylinderbank 1a, 1b der Brennkraftmaschine 1 ist jeweils eine Abgasleitung 10 bzw. 11 zugeordnet, beide Abgasleitungen 10 und 11 sind Teil des Abgasstrangs der Brennkraftmaschine. Die erste Abgasleitung 10 zweigt von der ersten Zylinderbank 1a ab und führt zu der motornahen Abgasturbine 4. Der Turbinenausgang der Turbine 4 ist über einen weiteren Leitungsabschnitt der ersten Abgasleitung 10 mit der motorfernen Abgasturbine 7 verbunden. Die zweite Abgasleitung 11 sammelt die Abgase der zweiten Zylinderbank 1b und führt diese unmittelbar der motorfernen Abgasturbine 7 zu.

Die motorferne Abgasturbine 7 ist zweiflutig aufgebaut und besitzt zwei Abgasfluten 7a und 7b. Die erste Abgasflut 7a der motorfernen Abgasturbine 7 ist über den Leitungsabschnitt 10 mit dem Ausgang der motornahen Abgasturbine 4 verbunden. Die zweite Abgasflut 7b wird über die zweite Abgasleitung 11 mit den Abgasen der Zylinderbank 1b versorgt. Die Abgasfluten 7a und 7b sind zweckmäßig separat ausgeführt, so dass ein direkter Gasaustausch zwischen den Abgasfluten verhindert ist. Die Abgase in den Abgasfluten 7a und 7b werden dem Turbinenrad der Abgasturbine 7 zugeführt.

Die motorferne Abgasturbine 7 kann darüber hinaus mit einer variablen Turbinengeometrie 22 ausgestattet sein, welche es ermöglicht, den Turbineneintrittsquerschnitt in Abhängigkeit aktueller Last- und Betriebszustände der Brennkraftmaschine variabel zwischen einem minimalen Stauquerschnitt und einem maximalen Öffnungsquerschnitt zu verstellen. Die variable Turbinengeometrie 22 erlaubt unter anderem die Realisierung einer Turbo-Bremsfunktion.

Des Weiteren ist die Brennkraftmaschine 1 mit einer Abgasrückführeinrichtung 15 ausgestattet, welche eine Abgasrückführleitung 16 sowie einen darin angeordneten Abgaskühler 17 und ein einstellbares Sperrventil 18 umfasst. Die Abgasrückführleitung 16 zweigt stromauf der ersten, motornahen Abgasturbine 4 von der ersten Abgasleitung 10 ab und mündet stromab des zweiten Ladeluftkühlers 14, welcher dem motornahen Verdichter 5 zugeordnet ist, in den Ansaugtrakt 12. Das Sperrventil 18 der Abgasrückführeinrichtung 15 kann zur Überführung von Abgas in den Ansaugtrakt 12 in Betriebszuständen geöffnet werden, in welcher der Abgasgegendruck in der Abgasleitung 10 den Ladedruck im Ansaugtrakt 12 übersteigt.

Die beiden Abgasleitungen 10 und 11 sind über eine Überbrückungsleitung 21 miteinander verbunden, welche von der Abgasleitung 11 stromauf der motorfernen Abgasturbine 7 abzweigt und in die Abgasleitung 10 stromab der motornahen Abgasturbine 4 einmündet. In der Überbrückungsleitung 21 ist ein einstellbares Sperrventil 20 angeordnet. Mithilfe der Überbrückungsleitung 21 kann Abgas zischen den Abgasleitungen umgeblasen werden.

Darüber hinaus ist über einen Leitungsabschnitt 19 die erste Abgasleitung 10 stromauf der motornahen Abgasturbine 4 über das Sperrventil 20 mit der Überbrückungsleitung 21 verbunden. Das Sperrventil 20 kann verschiedene Positionen einnehmen. In einer ersten Stellung des Sperrventils 20 ist nur der Leitungsabschnitt 19 geöffnet und der von der Abgasleitung 11 abzweigende, obere Abschnitt der Überbrückungsleitung 21 abgesperrt, wodurch in der ersten Abgasleitung 10 ein Bypass zur motornahen Abgasturbine 4 realisiert wird. In einer zweiten Position des Sperrventiles ist der Leitungsabschnitt 19 gesperrt und der von der Abgasleitung 11 abzweigende, obere Abschnitt der Überbrückungsleitung 21 geöffnet, so dass ein Gasaustausch zwischen der zweiten Abgasleitung 11 stromauf der zweiten, motorfernen Abgasturbine 7 und der ersten Abgasleitung 10 stromab der motornahen Abgasturbine 4 realisiert werden kann. In einer dritten Position können sowohl der Leitungsabschnitt 19 als auch der obere Abschnitt der Überbrückungsleitung 21 geöffnet sein. In einer vierten Position sind beide Leitungen bzw. Leitungsabschnitte abgesperrt.

Im Ausführungsbeispiel gemäß Fig. 2 ist die motorferne Abgasturbine 7 einflutig, die motornahe Abgasturbine 4 dagegen zweiflutig mit zwei Abgasfluten 4a und 4b ausgebildet. Darüber hinaus weist die motornahe Abgasturbine 4 eine variable Turbinengeometrie 22 zur veränderlichen Einstellung des wirksamen Turbineneintrittsquerschnittes auf. Die beiden Abgasleitungen 10 und 11, welche jeweils einer Zylinderbank 1a bzw. 1b zugeordnet sind, münden jeweils in eine Abgasflut 4a bzw. 4b der motornahen Abgasturbine 4. Der Ausgang der motornahen Abgasturbine 4 ist über einen weiteren Abschnitt der Abgasleitung 11 mit dem Eingang der motorfernen Abgasturbine 7 verbunden.

Der Leitungsabschnitt 19 zweigt stromauf der motornahen Abgasturbine 4 von der ersten Abgangsleitung 10 ab und mündet über das Sperrventil 20 in die Überbrückungsleitung 21, welche stromauf der motornahen Abgasturbine 4 von der zweiten Abgasleitung abzweigt und nach Art eines Bypass stromab dieser Abgasturbine wieder in den Abgasleitungsstrang einmündet. Wie im vorhergehenden Ausführungsbeispiel beschrieben kann das Sperrventil 20 verschiedene Positionen einnehmen, in denen die Überbrückungsleitung 21 und/oder der Leitungsabschnitt 19 wahlweise gesperrt oder geöffnet sind.

## Patentansprüche

1. Brennkraftmaschine mit zwei Abgasturboladern mit jeweils einer Abgasturbine (4, 7) und einem Verdichter (5, 8) im Ansaugtrakt (12), wobei zwei Abgasleitungen (10, 11) vorgesehen sind, die jeweils mindestens einer Abgasturbine (4, 7) zugeordnet sind, wobei zwischen einer Abgasleitung (10) stromauf einer Abgasturbine (4) und dem Ansaugtrakt (12) stromab eines Verdichters (5) eine Abgasrückführeinrichtung (15) mit einer Abgasrückführleitung (16) und einem einstellbaren Sperrventil (18) angeordnet ist, wobei die beiden Abgasleitungen (10, 11) über eine Überbrückungsleitung (19, 21), die stromauf der motornahen Abgasturbine (4) abzweigt und in der ein einstellbares Sperrventil (20) angeordnet ist, miteinander verbunden sind, wobei eine Abgasturbine (4, 7) mit variabler Turbinengeometrie (22) zur veränderlichen Einstellung des wirksamen Turbineneintrittsquerschnittes ausgestattet ist,
**dadurch gekennzeichnet, dass**
eine Abgasturbine (4, 7) zwei separate Abgasfluten (4a, 4b; 7a, 7b) aufweist, über die das Abgas dem Turbinenrad der betreffenden Abgasturbine (4, 7) zuführbar ist und die jeweils mit einer der beiden Abgasleitungen (10, 11) verbunden sind.

2. Brennkraftmaschine nach Anspruch 1,
**dadurch gekennzeichnet, dass**
die Abgase jeweils eines Teils der Zylinder der Brennkraftmaschine (1) in jeweils eine Abgasleitung (10, 11) einführbar sind.

3. Brennkraftmaschine nach Anspruch 1 oder 2,
**dadurch gekennzeichnet, dass**
die Abgasrückführleitung (16) von der Abgasleitung (10) unmittelbar stromauf der zweiflutigen Abgasturbine (4) abzweigt, die motornah angeordnet ist.

4. Brennkraftmaschine nach einem der Ansprüche 1 bis 3,
**dadurch gekennzeichnet, dass**
die motorferne Abgasturbine (7) in einem Abgasleitungsabschnitt (11) liegt, der mit dem Ausgang der motornahen Abgasturbine (4) verbunden ist.

5. Brennkraftmaschine nach Anspruch 1 oder 2,
**dadurch gekennzeichnet, dass**
die zweiflutige Abgasturbine (7) motorfern angeordnet ist.

6. Brennkraftmaschine nach Anspruch 5,
**dadurch gekennzeichnet, dass**
eine Abgasflut (7b) der motorfernen Abgasturbine (7) unmittelbar über eine Abgasleitung (11) mit dem Zylinderausgang der Brennkraftmaschine (1) und die andere Abgasflut (7a) dieser Abgasturbine (7) mit dem Ausgang der motornahen Abgasturbine (4) verbunden ist.

7. Brennkraftmaschine nach einem der Ansprüche 1 bis 6,
**dadurch gekennzeichnet, dass**
die Abgasturbinen (4, 7) unterschiedlich groß ausgeführt sind, wobei die Abgasleitung (10), in der die kleinere Abgasturbine (4) angeordnet ist, über die Abgasrückführleitung (16) mit dem Ansaugtrakt (12) verbunden ist.

8. Brennkraftmaschine nach einem der Ansprüche 1 bis 7,
**dadurch gekennzeichnet, dass**
die Überbrückungsleitung (21) stromab der motornahen Abgasturbine (4) in die mit dem Ausgang der motornahen Abgasturbine (4) verbundene Abgasleitung (10) einmündet.

9. Brennkraftmaschine nach einem der Ansprüche 1 bis 8,
**dadurch gekennzeichnet, dass**
ein die motornahe Abgasturbine (4) überbrückender Bypass (19, 21) vorgesehen ist.

10. Brennkraftmaschine nach einem der Ansprüche 1 bis 9,
**dadurch gekennzeichnet, dass**
die beiden Verdichter (5, 8) im Ansaugtrakt (12) hintereinander in Reihe geschaltet sind.

11. Brennkraftmaschine nach einem der Ansprüche 1 bis 10,
**dadurch gekennzeichnet, dass**
die Abgasrückführleitung (16) stromab des motornahen Verdichters (5) in den Ansaugtrakt (12) mündet.

## Claims

1. Internal combustion engine with two turbochargers, each comprising an exhaust gas turbine (4, 7) and a compressor (5, 8) in the intake train (12), wherein two exhaust gas lines (10, 11) are provided, each of which is assigned to at least one exhaust gas turbine (4, 7), wherein an exhaust gas recirculation device (15) with an exhaust gas recirculation line (16) and an adjustable shut-off valve (18) is disposed between an exhaust gas line (10) upstream of an exhaust gas turbine (4) and the intake train (12) downstream of a compressor (5), wherein the two exhaust gas lines (10, 11) are connected to each other by a bridging line (19, 21) branching off upstream of the exhaust gas turbine (4) located near the engine and containing an adjustable shut-off valve (20), wherein an exhaust gas turbine (4, 7) is provided with a variable turbine geometry (22) for the variable adjustment of the effective turbine inlet cross-section,
**characterised in that**
an exhaust gas turbine (4, 7) has two separate exhaust gas flows (4a, 4b; 7a, 7b) via which the exhaust gas can be fed to the turbine wheel of the respective exhaust gas turbine (4, 7) and each of which is connected to one of the two exhaust gas lines (10, 11).

2. Internal combustion engine according to claim 1,
**characterised in that**
the exhaust gases of a part of the cylinders of the internal combustion engine (1) can be fed into each exhaust gas line (10, 11).

3. Internal combustion engine according to claim 1 or 2,
**characterised in that**
the exhaust gas recirculation line (16) branches off the exhaust gas line (10) immediately upstream of the double-flow exhaust gas turbine (4) located near the engine.

4. Internal combustion engine according to any of claims 1 to 3,
**characterised in that**
the exhaust gas turbine (7) located remote from the engine is situated in an exhaust gas line section (11) connected to the outlet of the exhaust gas turbine (4) located near the engine.

5. Internal combustion engine according to claim 1 or 2,
**characterised in that**
the double-flow exhaust gas turbine (7) is located remote from the motor.

6. Internal combustion engine according to claim 5,
**characterised in that**
an exhaust gas flow (7b) of the exhaust gas turbine (7) located remote from the engine is directly connected to the cylinder outlet of the internal combustion engine (1) via an exhaust gas line (11) and the other exhaust gas flow (7b) of the same exhaust gas turbine (7) is connected to the outlet of the exhaust gas turbine (4) located near the engine.

7. Internal combustion engine according to any of claims 1 to 6,
**characterised in that**
the exhaust gas turbines (4, 7) are of different sizes, the exhaust gas line (10) housing the smaller exhaust gas turbine (4) being connected to the intake train (12) via the exhaust gas recirculation line (16).

8. Internal combustion engine according to any of claims 1 to 7,
**characterised in that**
the bridging line (21) terminates in the exhaust gas line (10) connected to the outlet of the exhaust gas turbine (4) located near the engine downstream of the exhaust gas turbine (4) located near the engine.

9. Internal combustion engine according to any of claims 1 to 8,
**characterised in that**
a bypass (19, 21) bridging the exhaust gas turbine (4) located near the engine is provided.

10. Internal combustion engine according to any of claims 1 to 9,
**characterised in that**
the two compressors (5, 8) are connected in series one behind the other in the intake train (12).

11. Internal combustion engine according to any of claims 1 to 10,
**characterised in that**
the exhaust gas recirculation line (16) terminates in the intake train (12) downstream of the exhaust gas turbine (4) located near the engine.

## Revendications

1. Moteur à combustion interne comprenant deux turbocompresseurs à gaz d'échappement qui comportent respectivement une turbine (4, 7) à gaz d'échappement et un compresseur (5, 8) dans le système d'admission, où deux collecteurs d'échappement (10, 11) qui sont respectivement associés à au moins une turbine à gaz d'échappement (4, 7), sont prévus, un dispositif de recyclage des gaz d'échappement (15) étant disposé entre un collecteur d'échappement (10) en amont d'une turbine à gaz d'échappement (4) et le système d'admission (12) en aval d'un compresseur (5), avec une conduite de recyclage des gaz d'échappement (16) et un clapet anti-retour (18) réglable, les deux collecteurs d'échappement (10, 11) étant reliés l'un à l'autre par une conduite de pontage (19, 21) qui bifurque en amont de la turbine à gaz d'échappement (4) située à proximité du moteur et dans laquelle est disposé un clapet anti-retour (20) réglable, une turbine à gaz d'échappement (4, 7) étant équipée d'une géométrie de turbine (22) variable pour ajuster de manière modulée et efficace la section transversale d'entrée de la turbine, **caractérisé en ce qu'**une turbine (4, 7) à gaz d'échappement présente deux flux de gaz d'échappement (4a, 4b; 7a, 7b) séparés permettant d'acheminer les gaz d'échappement vers la roue de la turbine (4, 7) à gaz d'échappement correspondante et qui sont reliés respectivement à l'un des deux collecteurs de gaz d'échappement (10, 11).

2. Moteur à combustion interne selon la revendication 1, **caractérisé en ce que** les gaz d'échappement respectivement d'une partie des cylindres du moteur à combustion interne (1) peuvent être introduits dans un collecteur de gaz d'échappement (10, 11) respectif.

3. Moteur à combustion interne selon la revendication 1 ou 2, **caractérisé en ce que** la conduite de recyclage de gaz d'échappement (16) bifurque du collecteur de gaz d'échappement (10) directement en amont de la turbine à gaz d'échappement (4) à double flux, qui est située à proximité du moteur.

4. Moteur à combustion interne selon l'une quelconque des revendications 1 à 3, **caractérisé en ce que** la turbine à gaz d'échappement (7) disposée à plus grande distance du moteur est située dans une section (11) du collecteur de gaz d'échappement qui est relié à la sortie de la turbine à gaz d'échappement (4) située à proximité du moteur.

5. Moteur à combustion interne selon la revendication 1 ou 2, **caractérisé en ce que** la turbine à gaz d'échappement à double flux (7) est disposée à plus grande distance du moteur.

6. Moteur à combustion interne selon la revendication 5, **caractérisé en ce qu'**un flux de gaz d'échappement (7b) de la turbine à gaz d'échappement situé à plus grande distance du moteur est reliée directement par un collecteur de gaz d'échappement (11) à la sortie du cylindre du moteur à combustion interne (1) et l'autre flux de gaz d'échappement (7a) de ladite turbine à gaz d'échappement est reliée à la sortie de la turbine à gaz d'échappement (4) située à proximité du moteur.

7. Moteur à combustion interne selon l'une quelconque des revendications 1 à 6, **caractérisé en ce que** les turbines à gaz d'échappement (4, 7) sont de grandeur variable, le collecteur de gaz d'échappement (10) dans lequel la plus petite turbine (4) à gaz d'échappement est installée, étant relié par la conduite de recyclage de gaz d'échappement (16) au système d'admission (12).

8. Moteur à combustion interne selon l'une quelconque des revendications 1 à 7, **caractérisé en ce que** la conduite de pontage (21) en aval de la turbine à gaz d'échappement (4) située à proximité du moteur débouche dans le collecteur de gaz d'échappement (10) relié à la sortie de la turbine de gaz d'échappement (4) située à proximité du moteur.

9. Moteur à combustion interne selon l'une quelconque des revendications 1 à 8, **caractérisé en ce qu'**une déviation (19, 21) court-circuite la turbine à gaz d'échappement (4) situé à proximité du moteur.

10. Moteur à combustion interne selon l'une quelconque des revendications 1 à 9, **caractérisé en ce que** les deux compresseurs (5, 8) sont connectés en série dans le système d'admission (12).

11. Moteur à combustion interne selon l'une quelconque des revendications 1 à 10, **caractérisé en ce que** la conduite de recyclage de gaz d'échappement (16) en aval du compresseur (5) situé à proximité du moteur débouche dans le système d'admission (12).
